**Europäisches Patentamt**

**European Patent Office**

**Office européen des brevets**

(11) Veröffentlichungsnummer: **0 059 239**
A2

(12) # EUROPÄISCHE PATENTANMELDUNG

(21) Anmeldenummer: **81108441.7**

(51) Int. Cl.³: **G 06 K 9/32**

(22) Anmeldetag: **16.10.81**

(30) Priorität: 27.02.81 DE 3107655

(43) Veröffentlichungstag der Anmeldung:
08.09.82 Patentblatt 82/36

(84) Benannte Vertragsstaaten:
AT BE FR GB IT

(71) Anmelder: SIEMENS AKTIENGESELLSCHAFT Berlin
und München
Postfach 22 02 61
D-8000 München 22(DE)

(72) Erfinder: Scherl, Wolfgang, Dipl.-Ing.
Kafkastrasse 54
D-8000 München 83(DE)

(54) Verfahren zum Auffinden und Abgrenzen von Textbereichen auf einer Vorlage, die Text-, Graphik- und/oder Bildbereiche enthalten kann.

(57) Eine beliebige auf Textinhalte hin zu untersuchende Druckvorlage wird optoelektronisch durch ein Videosystem abgetastet; die gewonnenen Abtastwerte werden digitalisiert zeilenweise verarbeitet; mittels mehrerer Verfahrensschritte werden bei Vorliegen von Text für die Textzeilen isolierte, d. h. einander nicht berührende, Schwarzblöcke gebildet, deren Anfangs- und Endkoordinaten mit denen der Textzeilen übereinstimmen und listenmäßig erfaßt werden.

FIG 4

EP 0 059 239 A2

Croydon Printing Company Ltd.

0059239

SIEMENS AKTIENGESELLSCHAFT
Berlin und München

Unser Zeichen
VPA 81 P 7013 E

Verfahren zum Auffinden und Abgrenzen von Textbereichen auf einer Vorlage, die Text-, Graphik- und/oder Bildbereiche enthalten kann.

Die vorliegende Erfindung betrifft ein Verfahren zum Auffinden und Abgrenzen von Textbereichen auf einer Vorlage, die Text-, Graphik - und/oder Bildbereiche enthalten kann.

In einem typischen Büro werden Schriftstücke erstellt, modifiziert und abgespeichert. Um diese Aufgaben möglichst wirtschaftlich lösen zu können, wurden Textbearbeitungsautomaten entwickelt, die auf einfachem Wege Fehlerkorrekturen, Einfügungen neuer Textteile, Zusammensetzungen von Texten mit unterschiedlichem Ursprung, beliebige Wiedergabe und eine elektronische Speicherung der die Textteile repräsentierenden Daten ermöglichen. Der Vorteil eines derartigen Textbearbeitungsautomaten gegenüber einer herkömmlichen Schreibmaschine liegt in seiner Flexibilität und Zeitersparnis beim Erstellen von Schriftstücken und der dadurch bedingten höheren Effektivität.

Ein wichtiges Kriterium bei der Entscheidung für einen Textbearbeitungsautomaten ist der Aufwand zum Speichern und/oder Übertragen von bereits auf Papier bestehender Information in und/oder auf den Textbearbeitungsautomaten. Eine manuelle Übertragung großer Textmengen ist sehr aufwendig. Von Vorteil wäre eine automatische Übertragung.

Eine Betrachtung von in Frage kommenden Vorlagen ergibt, daß diese im wesentlichen aus Text-, Graphik- und/oder Bildteilen bestehen. Um eine optimale Codierung der diese Vorlagenteile repräsentierenden Daten sowie eine getrennte Manipulation dieser genannten Komponenten errei-

Pap 1 Wi / 26.02.1981 chen zu können, muß ein Verfahren geschaffen werden, das in der Lage ist, die Komponenten automatisch zu trennen und als solche zu klassifizieren.

Der vorliegenden Erfindung liegt die Aufgabe zugrunde, ein Verfahren anzugeben, mittels dessen die obengenannten Vorgänge auf einfache, schnelle und zuverlässige Art und Weise ausgeführt werden können.

Die genannte Aufgabe wird durch ein Verfahren nach dem Oberbegriff des Hauptanspruchs gelöst, das durch die im kennzeichnenden Teil des Hauptanspruchs angegebenen Merkmale charakterisiert ist.

Die Erfindung bietet den Vorteil, daß ein verhältnismäßig einfaches Verfahren, das demzufolge auch - insbesondere durch die Verfügbarkeit preisgünstiger und raumsparender Datenverarbeitungs-Hilfsmittel, wie beispielsweise Mikrocomputer - eine verhältnismäßig einfache Anordnung zur Durchführung dieses Verfahrens voraussetzt, geschaffen wird, mittels dessen die genannte Aufgabe gelöst werden kann.

Weiterbildungen der Erfindung sind durch die in den Unteransprüchen angegebenen Merkmale gekennzeichnet.

Im folgenden wird die Erfindung an Hand mehrerer, Ausführungsbeispiele für die Erfindung betreffender Figuren im einzelnen erläutert.

Fig. 1 zeigt schematisch die Form eines Eingangsoperators zur Untersuchung der Vorlage auf das Vorhandensein von Text mit einer vorgegebenen Weißspaltenlänge LW und einer vorgegebenen Schwarzspaltenlänge LB.

Fig. 2 zeigt schematisch die Form eines Ausgangssignals für einen vertikalen Schwarzstrich LO.

Fig. 3 zeigt ein willkürlich gewähltes Schwarz-/Weißmuster zur späteren Erläuterung des erfindungsgemäßen Flächenverfolgungsverfahrens.

Fig. 4 zeigt ein Ergebnismuster entsprechend Fig. 3, bei dem die Schwarzbereiche im Zuge des erfindungsgemäßen Flächenverfolgungsverfahrens alphanumerisch gekennzeichnet worden sind.

Fig. 5 zeigt einen typischen Ausschnitt aus einer Druckvorlage mit einem reinen Textbereich und einem gemischten Bereich.

Fig. 6 zeigt einen typischen Ausschnitt aus einer Druckvorlage gemäß Fig. 5, jedoch in Schräglage relativ zu der Ausrichtung des Abtastorgans.

Fig. 7 zeigt ein Oszillogramm eines Ergebnismusters nach den erfindungsgemäßen Verfahrensschritten zum Ausdehnen und Schrumpfen von horizontalen Schwarzbereichen für die Druckvorlage gemäß Fig. 5.

Fig. 8 zeigt ein Oszillogramm eines Ergebnismusters nach den erfindungsgemäßen Verfahrensschritten zum Ausdehnen und Schrumpfen von horizontalen Schwarzbereichen für die Druckvorlage gemäß Fig. 6.

Fig. 9 zeigt ein Oszillogramm eines Ergebnismusters nach dem erfindungsgemäßen Verfahrensschritt zum Prüfen daraufhin, ob für Textbereiche charakteristische horizontale Weiß-/Schwarzübergänge mit einer vorgegebenen Weißspaltenlänge LW und einer vorgegebenen Schwarzspaltenlänge LB in einer Vorlage gemäß Fig. 5 vorhanden sind.

Fig. 10 zeigt ein Oszillogramm eines Ergebnismusters nach dem erfindungsgemäßen Verfahrensschritt zum Prüfen daraufhin, ob für Textbereiche charakteristische horizontale Weiß-/Schwarzübergänge mit einer vorgegebenen Weißspaltenlänge LW und einer vorgegebenen Schwarzspaltenlänge LB in einer Vorlage gemäß Fig. 6 vorhanden sind.

Fig. 11 zeigt ein Diagramm jeweils paarweise miteinander verbundener Extremkoordinaten von Schwarzbereichen aus der Vorlage gemäß Fig. 5.

Fig. 12 zeigt ein Diagramm jeweils paarweise miteinander verbundener Extremkoordinaten von Schwarzbereichen aus der Vorlage gemäß Fig. 6.

Fig. 13 zeigt ein Diagramm der jeweils paarweise miteinander verbundenen Extremkoordinaten von Schwarzbereichen aus der Vorlage gemäß Fig. 5, jedoch nach dem erfindungsgemäßen Verfahrensschritt zur Klassifizierung mittels Lauflängenstatistik.

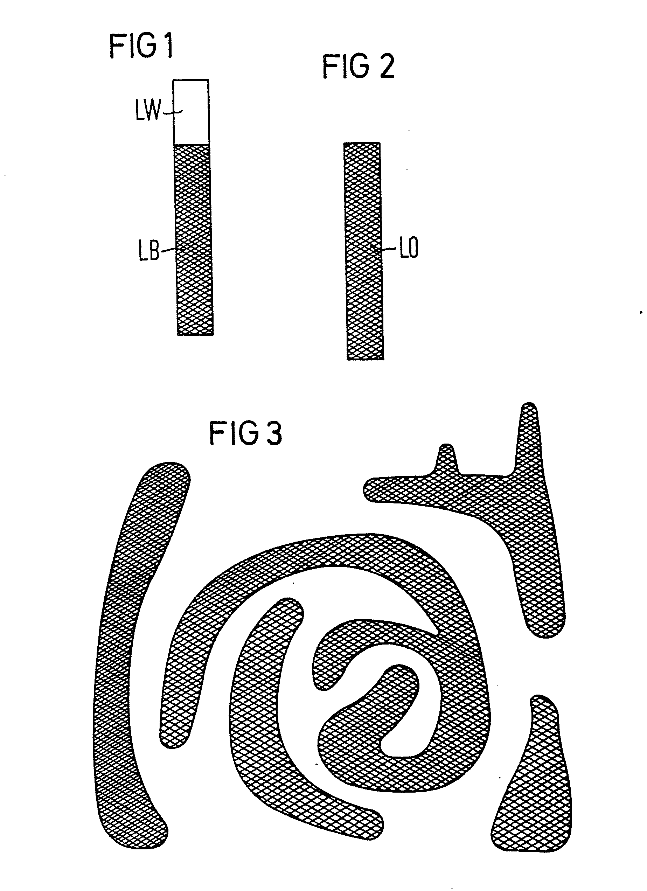

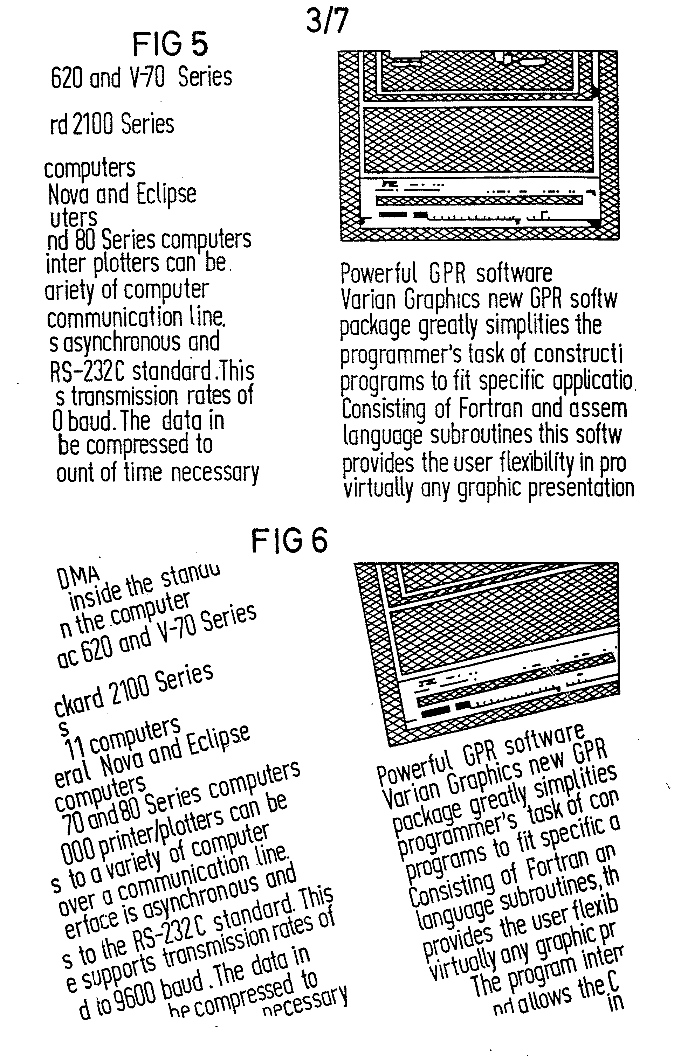

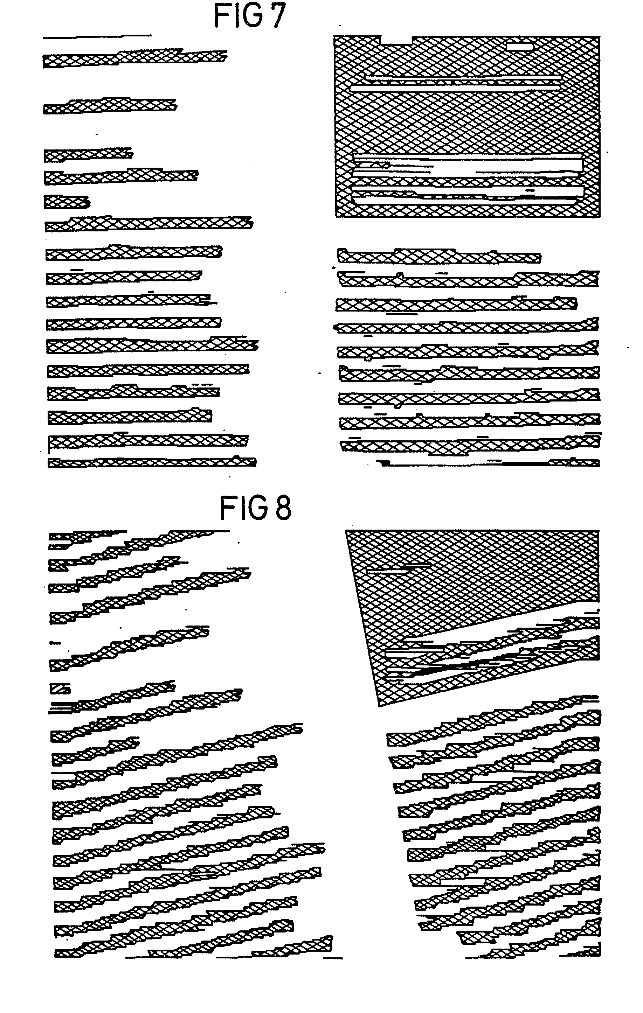

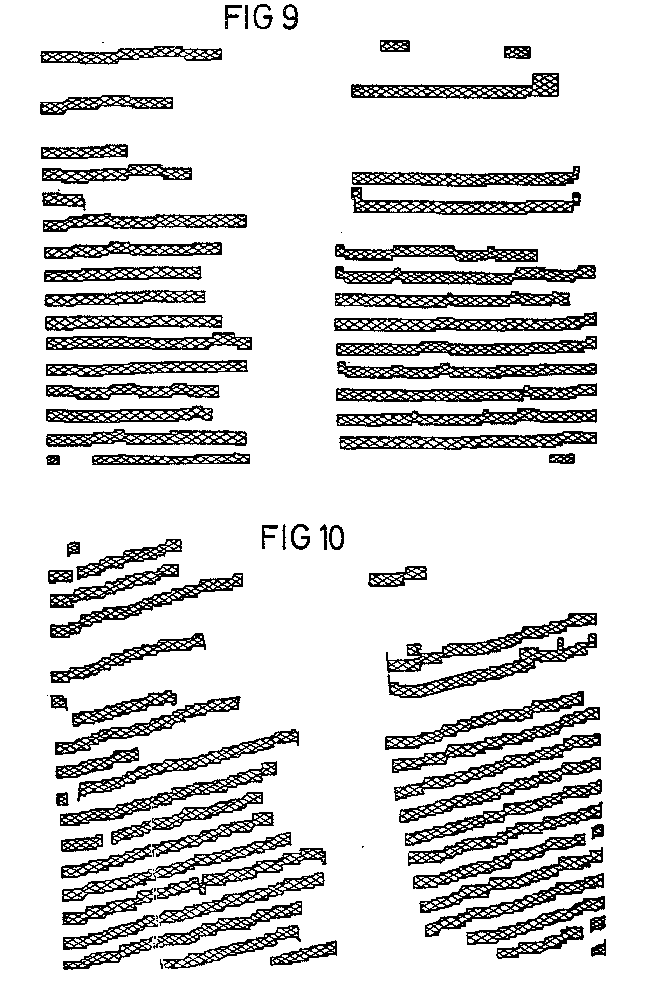

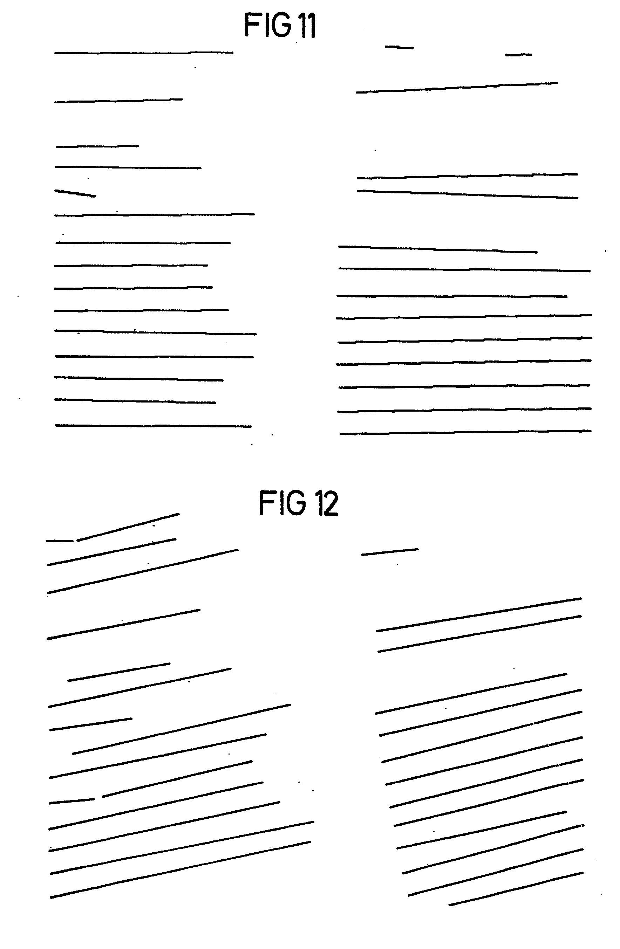

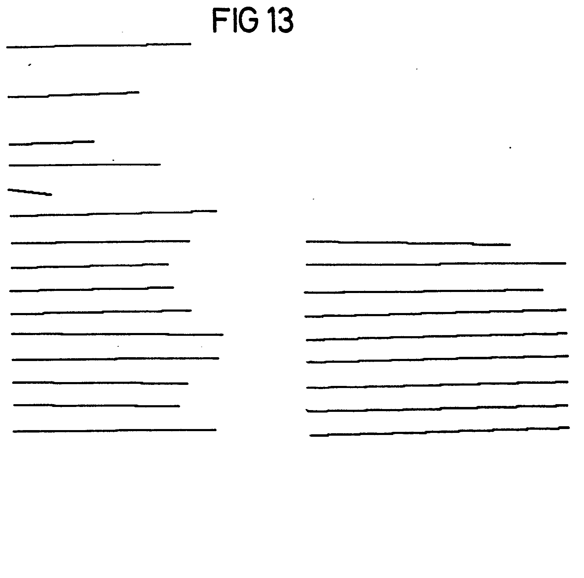

Bei dem erfindungsgemäßen Verfahren wird die Vorlage, vgl. Fig. 5 bzw. Fig. 6, zunächst in einem ersten Schritt optoelektronisch, vorzugsweise mittels einer Videokamera, in an sich bekannter Weise abgetastet. Die in analoger Form entstehenden, die optoelektronische Abbildung der Vorlage repräsentierenden Signale werden in einem zweiten Schritt mittels eines Entscheidungsvorganges jeweils entweder einer einen "Weißwert" repräsentierenden Binärzahl, vorzugsweise 1, oder einer einen "Schwarzwert" repräsentierenden Binärzahl, vorzugsweise 0, zugeordnet. In einem dritten Schritt werden zeilenweise alle in dem Entscheidungsvorgang als "schwarz" bestimmten, durch die betreffende Binärzahl repräsentierten Punkte nach einer vorgegebenen Regel vervielfacht, so daß jeweils aus einem Punkt ein horizontaler Strich vorbestimmter Länge erzeugt wird, wodurch beispielsweise bei Vorliegen einer Textzeile in dem betreffenden abgetasteten Bereich der Vorlage Schwarzblöcke entstehen, deren Länge der betreffenden Länge der Textzeile zuzüglich der vorgegebenen Ausdehnungslänge für die "schwarzen" Punkte entspricht. Anschließend wird in einem vierten Schritt jeweils für die so erhaltene Zwischenergebniszeile in umgekehrter Richtung jeder "weiße" Punkt mittels eines gleichartigen Verfahrens zu einem Strich vorbestimmter Länge ausdehnt, wobei diese Länge größer als die bisherige Schwarzausdehnung ist, so daß der zuvor entstandene Schwarzblock um eine entsprechende Länge gekürzt wird. Dadurch entstehen Muster, wie sie in Fig. 7 bzw. Fig. 8 dargestellt sind. In einem fünften Schritt wird der auf diese Weise von geringfügigen Unstetigkeiten befreite Schwarzblock um die Differenzlänge zu der originalen Textzeilenlänge verlängert, so daß ein über die gesamte Textzeilenlänge reichender Schwarzblock entsteht. In einem sechsten Schritt wird anschließend mittels eines Operators, vergl. Fig. 1, geprüft, ob für Textbereiche charakteristische horizontale Weiß-/Schwarzübergänge mit einer vorgegebenen Weißspaltenlänge LW und einer vorgegebenen Schwarzspaltenlänge LB vorhanden sind. Im Falle eines jeweiligen Vorhandenseins eines solchen Weiß-/Schwarzüberganges wird ein vertikaler Schwarzstrich LO, vergl. Fig. 2, vorbestimmter Länge erzeugt, so daß für jede Textzeile ein von seiner Umgebung isolierter Schwarzblock entsteht, vergl. Fig. 9 bzw. Fig. 10. In einem siebten Schritt werden erfindungsgemäß mittels eines Flächenverfolgungsverfahrens von den derart entstandenen Schwarzblöcken die jeweils linksseitigen und rechtsseitigen Extremkoordinaten bestimmt, vergl. Fig. 11 bzw. Fig. 12, und zu einer Liste zusammengefaßt. Schließlich werden in einem achten Schritt mittels statistischer Prüfverfahren die derart erechneten Extremkoordinaten daraufhin untersucht, ob diese tatsächlich einen Textteil begrenzen, vergl. Fig. 13.

Gemäß einer vorteilhaften Ausgestaltung der Erfindung wird der Operator dadurch gebildet, daß jeweils "rollend" ein Fenster von LW + LB Abtastzeilen gespeichert wird, daß hierbei jeweils die ersten LW Abtastzeilen invertiert werden und daß die Operatorbedingung durch spaltenweise Summenbildung abgeprüft werden kann, wobei die Operatorbedingung für diejenige Spalte erfüllt ist, für die sich eine Spaltensumme von 0 ergibt.

Das Vorhandensein eines vertikalen Schwarzstriches LO wird dadurch zeilenweise abprüfbar, daß je Ausgabespalte ein Zähler vorgesehen ist, der zu Beginn des Gesamtvorganges gelöscht wird. Dieser Zähler wird jeweils zeilenweise um 1 herabgesetzt, jedoch bei Erfüllung der Operatorbedingung auf die Länge LO gesetzt. Der Zähler ist dahingehend abprüfbar, daß Bereiche in einer Operatorausgangszeile als einem Schwarzblock zugehörig bewertet werden, solange der Wert des jeweiligen Spaltenzählers größer als 0 ist.

Die von dem Operator gelieferte Ausgangszeile wird auf Schwarzanteile hin untersucht. Jeweils jeder neu beginnende Schwarzbereich wird in einem Flächenverfolgungsverfahren abgetastet, wobei seine Extremkoordinaten errechnet werden. Dazu wird jeder neu beginnende Schwarzbereich mit einer Nummer, die um 1 erhöht ist, numeriert. Innerhalb eines ununterbrochenen Schwarzbereiches innerhalb einer Abtastzeile wird ein derartiger Schwarzbereich mit derselben Nummer durchnumeriert. Bei Feststellen einer Berührung eines bereits in der Vorzeile numerierten Schwarzbereiches mit dem gerade neu zu numerierenden Schwarzbereich wird die Numerierung des in der Vorzeile bereits numerierten Schwarzbereiches übernommen, so daß eine bereits bestehende Numerierung zeilenweise über den Gesamt-Schwarzbereich fortgesetzt wird. Bei Berührung eines Schwarzbereiches der neuen Zeile mit mehreren Schwarzbereichen der alten Zeile wird jeweils die Numerierung des am weitesten links stehenden Bereiches fortgeführt. Es wird geprüft, ob die weiter rechts stehenden berührenden Numerierungen in weiter links stehenden Schwarzbereichen der Zeile bereits existieren. Für den Fall, daß diese Bedingung erfüllt ist,

-7-    VPA 81 P 7013 E

wird diese Numerierung für den neu zu numerierenden Bereich verwendet. Für jede ermittelte Numerierung wird ein Tabelleneintrag vorgenommen, in dem die unter dieser Numerierung auftretenden Extremkoordinaten festgehalten werden. Bei Übergehen eines Numerierungsbereichs in einen neuen Numerierungsbereich werden die interessierenden Extremkoordinaten im Tabelleneintrag der neuen Numerierung nachgetragen. Die bei Überlappung verschwindenden Tabelleneinträge werden nach dem Eintrag der Extremkoordinaten aus der Tabelle gelöscht. Bei Abschluß eines Schwarzbereiches und somit Verschwinden der Numerierung wird der entsprechende Tabelleneintrag in eine Ausgabeliste übertragen und der Schwarzbereich als abgeschlossen betrachtet. Diese Eintragungen werden nach Feststellung eines tatsächlich vorhandenen Textteiles als dessen Extremkoordinaten, nämlich Anfangs- bzw. Endkoordinaten der betreffenden Textzeile weiterverwendet.

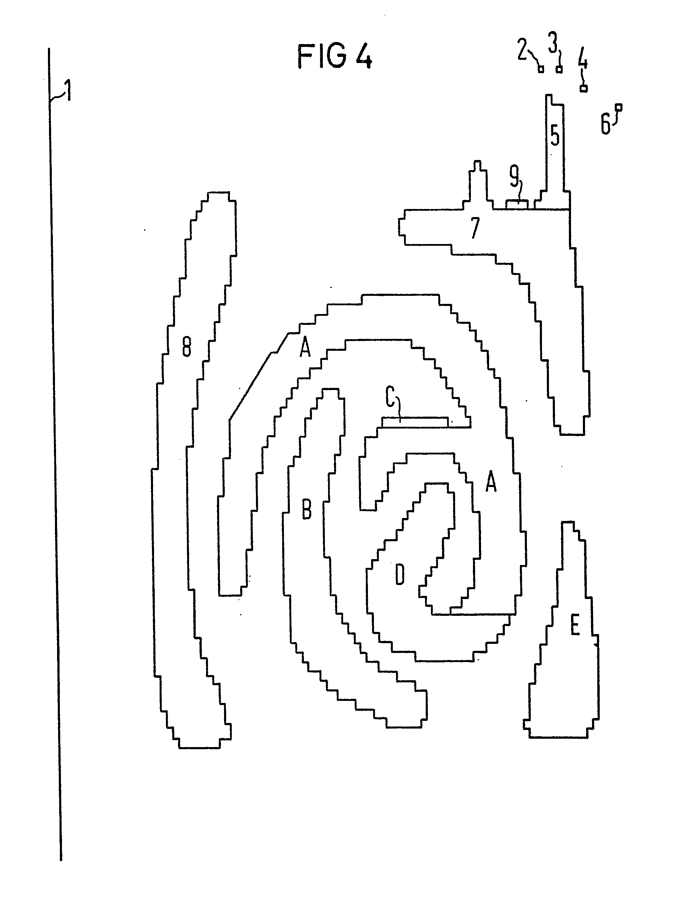

Ein willkürlich gewähltes Schwarz-/Weißmuster zur Erläuterung dieses Flächenverfolgungsverfahrens und dem Prinzip der Numerierung ist anhand der Figuren 3 und 4 verdeutlicht.

Eine Ausführungsform der Erfindung sieht vor, daß die in analoger Form entstehenden, die optoelektronische Abbildung repräsentierenden Signale in einem Analogverfahren in "Weißwerte" und "Schwarzwerte" eingeteilt werden.

Eine andere vorteilhafte Ausführungsform für die Erfindung sieht vor, daß die in analoger Form entstehenden, die optoelektronische Abbildung repräsentierenden Signale in an sich bekannter Weise digitalisiert werden und daß die derart gewonnenen Digitalwerte mittels eines der an sich bekannten Verfahren, vorzugsweise durch Vergleich mit einem vorgegebenen digitalen Schwellwert, in "Weißwerte" und "Schwarzwerte" eingeteilt werden.

0059239

-8-   VPA 81 P 7013 E

Zum Einteilen in "Weißwerte" und "Schwarzwerte" kann auf einfache Weise ein fest vorgegebener Bezugswert, vorzugsweise ein Schwellwert, verwendet werden. Es kann jedoch vorteilhaft sein, daß zum Einteilen in "Weißwerte" und "Schwarzwerte" ein adaptierbarer Bezugswert, vorzugsweise ein Schwellwert, verwendet wird. Um Nichtlinearitäten in der Arbeitsweise der Einrichtung zum optoelektronischen Abtasten der Vorlage zu berücksichtigen, ist es vorteilhaft, die Kenndaten dieser Einrichtung dazu zu benutzen, den Bezugswert zu adaptieren.

Eine andere vorteilhafte Ausgestaltung der Erfindung sieht vor, daß ständig während des Abtastvorganges ein ein Einstellkriterium repräsentierendes Signal aus den Abtastsignalen abgeleitet wird, das dazu benutzt wird, den Bsugswert zu adaptieren.

10 Patentansprüche
13 Figuren

0059239

VPA
81 P 7013 E

Patentansprüche

1. Verfahren zum Auffinden und Abgrenzen von Textbereichen auf einer Vorlage, die Text-, Graphik- und/oder Bildbereiche enthalten kann, d a d u r c h   g e -
k e n n z e i c h n e t ,   daß die Vorlage in einem ersten Schritt optoelektronisch, vorzugsweise mittels einer Videokamera, in an sich bekannter Weise abgetastet wird, daß die in analoger Form entstehenden, die optoelektronische Abbildung der Vorlage repräsentierenden Signale in einem zweiten Schritt mittels eines Entscheidungsvorganges jeweils entweder einer einen "Weißwert" repräsentierenden Binärzahl, vorzugsweise 1, oder einer einen "Schwarzwert" repräsentierenden Binärzahl, vorzugsweise 0, zugeordnet werden, daß in einem dritten Schritt zeilenweise alle in dem Entscheidungsvorgang als "schwarz" bestimmten, durch die betreffende Binärzahl repräsentierten Punkte nach einer vorgegebenen Regel vervielfacht werden, so daß jeweils aus einem Punkt ein horizontaler Strich vorbestimmter Länge erzeugt wird, wodurch beispielsweise bei Vorliegen einer Textzeile in dem betreffenden abgetasteten Bereich der Vorlage Schwarzblöcke entstehen, deren Länge der betreffenden Länge der Textzeile zuzüglich der vorgegebenen Ausdehnungslänge für die "schwarzen" Punkte entspricht, daß in einem vierten Schritt für jeweils die so erhaltene Zwischenergebniszeile in umgekehrter Richtung jeder "Weiße" Punkt mittels eines gleichartigen Verfahrens zu einem Strich vorbestimmter Länge ausgedehnt wird, der größer als die vorherige Schwarzausdehnung ist, so daß der zuvor entstandene Schwarzblock um eine entsprechende Länge gekürzt wird, daß in einem fünften Schritt der auf diese Weise von geringfügigen Unstetigkeiten befreite Schwarzblock um die Differenzlänge zu der originalen Textzeilenlänge verlängert wird, so daß ein über die gesamte Textzeilenlänge reichender Schwarzblock entsteht, daß in einem sechsten Schritt mittels eines Operators geprüft wird, ob für Textbereiche charakteristische hori-

0059239

zontale Weiß-/Schwarzübergänge mit einer vorgegebenen Weißspaltenlänge (LW) und einer vorgegebenen Schwarzspaltenlänge (LB) vorhanden sind, und im Falle eines jeweiligen Vorhandenseins eines solchen Weiß-/Schwarzüberganges ein vertikaler Schwarzstrich (LO; Fig. 9, 10) vorbestimmter Länge erzeugt wird, so daß für jede Textzeile ein von seiner Umgebung isolierter Schwarzblock entsteht, daß in einem siebten Schritt mittels eines Flächenverfolgungsverfahrens von den derart entstandenen Schwarzblöcken die jeweils linksseitigen und rechtsseitigen Extremkoordinaten bestimmt und zu einer Liste zusammengefaßt werden und daß in einem achten Schritt mittels statistischer Prüfverfahren die derart erechneten Extremkoordinaten daraufhin untersucht werden, ob diese tatsächlich einen Textteil begrenzen.

2. Verfahren nach Anspruch 1, d a d u r c h   g e - k e n n z e i c h n e t , daß der Operator dadurch gebildet wird, daß jeweils "rollend" ein Fenster von LW + LB Abtastzeilen gespeichert wird, daß hierbei jeweils die ersten LW Abtastzeilen invertiert werden und daß die Operatorbedingung durch spaltenweise Summenbildung abgeprüft werden kann, wobei die Operatorbedingung für diejenige Spalte erfüllt ist, für die sich eine Spaltensumme von Null ergibt.

3. Verfahren nach Anspruch 1 oder 2, d a d u r c h   g e k e n n z e i c h n e t , daß das Vorhandensein eines vertikalen Schwarzstriches (LO) dadurch zeilenweise abprüfbar wird, daß je Ausgabespalte ein Zähler vorgesehen ist, der zu Beginn des Gesamtvorganges gelöscht wird, daß der Zähler jeweils zeilenweise um 1 herabgesetzt wird, jedoch bei Erfüllung der Operatorbedingung auf die Länge LO gesetzt wird und dahingehend abprüfbar ist, daß Bereiche in einer Operatorausgangszeile als einem Schwarzblock zugehörig bewertet werden, solange der Wert des jeweiligen Spaltenzählers größer als Null ist.

4. Verfahren nach Anspruch 1, d a d u r c h g e -
k e n n z e i c h n e t , daß die von dem Operator gelieferte Ausgangszeile auf Schwarzanteile hin untersucht
wird, daß jeweils jeder neu beginnende Schwarzbereich mit
um 1 erhöhter Numerierung neu numeriert wird, daß innerhalb eines ununterbrochenen schwarzen Bereiches innerhalb
einer Abtastzeile mit derselben Nummer weiter numeriert
wird, daß bei Feststellen einer Berührung eines bereits
in der Vorzeile numerierten Schwarzbereiches mit dem gerade neu zu numerierenden Schwarzbereich die Numerierung
des in der Vorzeile bereits numerierten Schwarzbereiches
übernommen wird, so daß ein über diese beiden Zeilen reichender Gesamt-Schwarzbereich mit gleicher Numerierung
entsteht, daß bei Berührung eines Schwarzbereiches der
neuen Zeile mit mehreren Schwarzbereichen der alten Zeile
jeweils die Numerierung des am weitesten links stehenden
Bereiches fortgeführt wird, daß geprüft wird, ob die weiter rechts stehenden berührenden Numerierungen in anderen
weiter links stehenden Schwarzbereichen der Zeile bereits
existieren und für den Fall, daß diese Bedingung erfüllt
ist, diese Numerierung für den neu zu numerierenden Bereich verwendet wird, daß für jede ermittelte Numerierung
ein Tabelleneintrag vorgenommen wird, in dem die unter
dieser Numerierung auftretenden Extremkoordinaten festgehalten werden, daß bei Übergehen eines Numerierungsbereiches in einen neuen Numerierungsbereich die interessierenden Extremkoordinaten im Tabelleneintrag der neuen Numerierung nachgetragen werden, daß diese bei Überlappung
verschwindenden Tabelleneinträge nach dem Eintrag der Extremkoordinaten aus der Tabelle gelöscht werden, daß bei
Abschluß eines Schwarzbereiches und somit Verschwinden
der Numerierung der entsprechende Tabelleneintrag in eine
Ausgabeliste übernommen wird und der Schwarzbereich als
abgeschlossen betrachtet wird und daß diese Eintragungen
nach Feststellung eines tatsächlich vorhandenen Textteiles
als dessen Extremkoordinaten, nämlich Anfangs bzw. Endkoordinaten der betreffenden Textzeile, weiterverwendet werden.

5. Verfahren nach Anspruch 1, d a d u r c h g e - k e n n z e i c h n e t , daß die in analoger Form entstehenden, die optoelektronische Abbildung repräsentierenden Signale in einem Analogverfahren in "Weißwerte" und "Schwarzwerte" eingeteilt werden.

6. Verfahren nach Anspruch 1, d a d u r c h g e - k e n n z e i c h n e t , daß die in analoger Form entstehenden, die optoelektronische Abbildung repräsentierenden Signale in an sich bekannter Weise digitalisiert werden und daß die derart gewonnenen Digitalwerte mittels eines der an sich bekannten Verfahren, vorzugsweise durch Vergleich mit einem vorgegebenen digitalen Schwellwert, in "Weißwerte" und "Schwarzwerte" eingeteilt werden.

7. Verfahren nach Anspruch 5 oder 6, d a d u r c h g e - k e n n z e i c h n e t , daß zum Einteilen in "Weißwerte" und "Schwarzwerte" ein fest vorgegebener Bezugswert, vorzugsweise ein Schwellwert, verwendet wird.

8. Verfahren nach Anspruch 5 oder 6, d a d u r c h g e - k e n n z e i c h n e t , daß zum Einteilen in "Weißwerte" und "Schwarzwerte" ein adaptierbarer Bezugswert, der aus seiner Umgebung berechnet wird, vorzugsweise ein Schwellwert, verwendet wird.

9. Verfahren nach Anspruch 8, d a d u r c h g e - k e n n z e i c h n e t , daß die Kenndaten der Einrichtung zum optoelektronischen Abtasten der Vorlage dazu benutzt werden, den Bezugswert zu adaptieren.

10. Verfahren nach Anspruch 8, d a d u r c h g e - k e n n z e i c h n e t , daß ständig während des Abtastvorganges ein ein Einstellkriterium repräsentierendes Signal aus den Abtastsignalen abgeleitet wird, das dazu benutzt wird, den Bezugswert zu adaptieren.

FIG 1

LW

LB

FIG 2

LO

FIG 3

FIG 4

## FIG 5
620 and V-70 Series

rd 2100 Series

computers
Nova and Eclipse
uters
nd 80 Series computers
inter plotters can be.
ariety of computer
communication line.
s asynchronous and
RS-232C standard.This
s transmission rates of
0 baud. The data in
be compressed to
ount of time necessary

Powerful GPR software
Varian Graphics new GPR softw
package greatly simplities the
programmer's task of constructi
programs to fit specific applicatio.
Consisting of Fortran and assem
language subroutines this softw
provides the user flexibility in pro
virtually any graphic presentation

## FIG 6

DMA
inside the standu
n the computer
ac 620 and V-70 Series

ckard 2100 Series

s
11 computers
eral Nova and Eclipse
computers
70 and 80 Series computers
000 printer/plotters can be
s to a variety of computer
over a communication line.
erface is asynchronous and
s to the RS-232C standard. This
e supports transmission rates of
d to 9600 baud. The data in
he compressed to
necessary

Powerful GPR software
Varian Graphics new GPR
package greatly simplities
programmer's task of con
programs to fit specific a
Consisting of Fortran an
language subroutines, th
provides the user flexib
virtually any graphic pr
The program inter
nd allows the C
in

0059239

4/7

FIG 7

FIG 8

FIG 9

FIG 10

FIG 11

FIG 12

FIG 13